Europäisches Patentamt

European Patent Office

Office européen des brevets

(11) Publication number: **0 524 751 B1**

# EUROPEAN PATENT SPECIFICATION

(45) Date of publication of patent specification: **25.10.95**  (51) Int. Cl.⁶: **A23L 1/32**, A23G 3/00, A23B 5/04

(21) Application number: **92306335.8**

(22) Date of filing: **10.07.92**

(54) **Freeze-denatured egg yolk; oil-in-water type emulsion composition containing the same; and use in preparation of confectionery products.**

(30) Priority: **25.07.91 JP 210306/91**

(43) Date of publication of application:
**27.01.93 Bulletin 93/04**

(45) Publication of the grant of the patent:
**25.10.95 Bulletin 95/43**

(84) Designated Contracting States:
**BE DE FR GB NL**

(56) References cited:
**US-A- 4 663 176**

**DATABASE WPIL Section Ch, Week 9013,
Derwent Publications Ltd., London, GB;
Class D, AN 90-094969**

**DATABASE WPIL Section Ch, Week 7819,
Derwent Publications Ltd., London, GB;
Class D, AN 78-34450A**

**DATABASE WPIL Section Ch, Week 8737,
Derwent Publications Ltd., London, GB;
Class D, AN 87-260047**

(73) Proprietor: **FUJI OIL COMPANY, LIMITED
1-5, Nishishinsaibashi 2-chome,
Chuo-ku
Osaka-shi,
Osaka-fu 542 (JP)**

(72) Inventor: **Inayoshi, Kuniaki
360-34, Tarui
Sennan-shi,
Osaka-fu (JP)**
Inventor: **Yabuuchi, Sayoko
4-150-1, Kitashinmachi
Matsubara-shi,
Osaka-fu (JP)**

(74) Representative: **Baverstock, Michael George
Douglas et al
BOULT, WADE & TENNANT
27 Furnival Street
London, EC4A 1PO (GB)**

DATABASE WPI Section Ch, Week 7620, Derwent Publications Ltd., London, GB; Class D, AN 76-37376X

DATABASE WPIL Section Ch, Week 8930, Derwent Publications Ltd., London, GB; Class D, AN 89-218766

## Description

The present invention relates to a raw material useful for various confectioneries, in particular, to freeze-denatured egg yolk, i.e., egg yolk denatured by freezing, which keeps the flavor of fresh egg yolk even when sterilized at an ultra-high temperature and a stable oil-in-water (o/w) type emulsion composition containing the freeze-denatured egg yolk.

It is well known that eggs are a relatively cheap raw material of food and have the desired flavor. In particular, since egg yolk contains about 32% of lipid and about 17% of good proteins, its use as a raw material of confectioneries is also of important significance from the nutritional point of view. Therefore, egg yolk can be used as a material for confectioneries such as mousse and the like by emulsifying and frothing it. However, as described in the specification of JP-A 62-44148, the proteins of egg yolk are, unlike casein in milk, sensitive to mechanical shearing actions in an emulsifying step and to heating in sterilization and are denatured rapidly. Accordingly, an uncooked aseptic o/w type emulsion having frothing properties and good quality which contains a large amount of egg yolk and is suitable as a raw material of mousse and the like cannot be obtained. Also, the amount of such egg yolk to be added to an uncooked o/w emulsion having frothing properties (e.g., topping cream) is limited to, at most, about 2% by weight. Further, due to heating in the production of food, the flavor tends to change into that of a cooked egg product which is far from that of fresh egg yolk.

In addition to the above problems in physical and chemical properties, there is a specific problem in the production of food containing such an emulsion containing egg yolk that the emulsion is scorched by heating and sticks to the inner surface of a heat exchanger of a sterilizer (e.g., the inner surface of a holding tube of VTIS). Then, the inner surface of an heat exchanger must be always cleaned or otherwise, in an extreme case, there may be a risk of a blockade of the passages. Therefore, from the industrial point of view, it is necessary to use a sterilizer having an inner surface scraper such as that for the production of custard. In such a case, any product having high uniformity can hardly be obtained because scraped materials having different compositions are contained in the product and, in particular, when scaling up, scorched materials are mixed into the product.

For the above reasons, current products using uncooked aseptic egg yolk are limited practically to egg custard having a low fat content. Then, in order to produce frothed confectioneries such as mousse, "tilamis" and the like which satisfy with the taste of today, in general, egg yolk, sugar, a gelation agent and the like are added to a frothed material which has been prepared in advance. However, such a process requires separate steps and is troublesome. In particular, sterilization of egg yolk for preventing contamination by bacteria such as the genus <u>Salmonella</u> is labor-intensive and takes time.

The present invention provides an uncooked aseptic emulsion composition containing egg yolk which has the flavor of fresh egg yolk and good frothing properties as well as freezing-denatured egg yolk which is necessary for obtaining said composition.

Also the present invention provides an o/w type emulsion composition containing egg yolk which hardly scorches the apparatus even when applied to an ultra-high temperature short time sterilization (UHT) apparatus such as VTIS and STOKES.

The above as well as other advantages of the present invention will become apparent to those skilled in the art from the following description and the accompanying drawings.

In the drawings:

Figure 1 is a graph showing the influence of the change in freezing and thawing conditions on an amount of soluble proteins of egg yolk.

Figure 2 is a graph showing the relationship between a freezing temperature and a rheometer value of egg yolk as defined hereinafter.

Figure 3 is a graph showing the relationship between the amount of fat content and melting in the mouth of an o/w type emulsion composition containing egg yolk and having frothing properties (hereinafter sometimes referred to as a frothing o/w type emulsion composition).

Figure 4 is a flow sheet of the production steps of the frothing o/w type emulsion composition of the present invention.

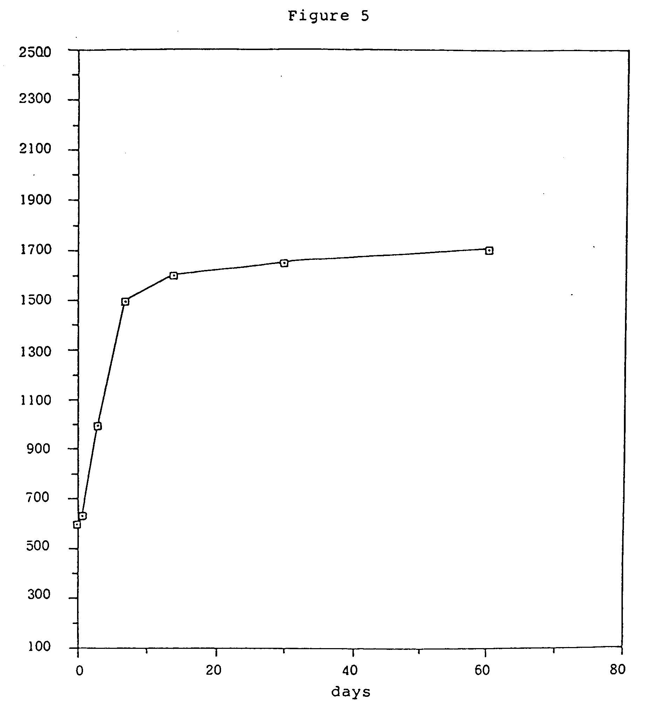

Figure 5 is a graph showing the change in viscosity of the frothing o/w type emulsion composition containing egg yolk obtained in Examples hereinafter.

According to the present invention, there is provided freeze-denatured egg yolk having of a rheometer value after freezing denaturation of 20 to 100 $g/cm^2$ obtained by using a plunger of 10 mm diameter. The present invention further provides an o/w type emulsion composition comprising 1 to 20% by weight of freeze-denatured egg yolk having a rheometer value after freezing denaturation of 20 to 100 $g/cm^2$ obtained by using a plunger of 10 mm diameter.

The means for incorporating egg yolk into an o/w type emulsion system without losing the flavor of fresh egg yolk and the scaling problem upon conducting UHT have been intensively studied. As a result, it has been found that:

(1) When fresh egg yolk is used, scorching inevitably occurs. For example, in the case of carrying out sterilization with VTIS which is a kind of UHT sterilization apparatus, scaling occurs on the entire inner wall of the holding tube which connects an injector of high temperature steam and a vacuum chamber. This may be caused by coagulation of proteins, mainly egg yolk proteins, due to heat denaturation by such a rapid and high thermal treatment as at 145 °C for a few seconds after a pre-heating zone at about 70°C. When proteins are rapidly denatured by heating, they become hydrophobic and adversely influence the emulsification state in an o/w type emulsion, which also results in a remarkable increase in viscosity or plasticization (so-called "thickening") of the resulting o/w type emulsion composition.

(2) Therefore, for preventing scorching, it is essential that egg yolk proteins are subjected to a denaturation treatment as much as possible prior to undergoing the above high temperature thermal treatment. Further, although freezing-denaturation and pressure-treatment are desired among various denaturation treatments in view of the flavor of egg yolk, pressure-treatment is disadvantageous in view of the cost of plant and equipment.

(3) By using a rheometer value as an index of the degree of freezing-denaturation, a fat or oil composition having frothing properties and good flavor can be obtained.

The present invention is based on these findings. In any event, although there are many patents and patent applications relating to frozen egg yolk, they avoid denaturation of egg yolk itself as much as possible and are completely different from the present invention in that denaturation of egg yolk is positively intended.

Thus, as described above, the present invention provides freeze-denatured egg yolk having a rheometer value after freezing denaturation of 20 to 100 g/cm$^2$ obtained by using a plunger of 10 mm diameter. Further, the present invention provides an o/w type emulsion composition comprising 1 to 20% by weight of freeze-denatured egg yolk having a rheometer value after freezing denaturation of 20 to 100 g/cm$^2$ obtained by using a plunger of 10 mm diameter.

Various experiments on which the present invention is based and respective constituent elements of the present invention are illustrated in detail below. In the following description, all percent figures are by weight unless otherwise stated.

Experiments on egg yolk

(1) Test 1

Correlation between the amounts of fresh egg yolk and MSNF vs. scorching

Test samples having the oil content of 30% and the solid content of 55% were prepared by mixing egg yolk and milk solids-not-fat (MSNF) and varying the proportion of egg yolk and MSNF and the correlation between the amounts of egg yolk and MSNF vs. scorching was observed. The solid content of respective samples was adjusted with sugars (glucose, sorbitol, etc.). The test sample was heated with steam at 144°C for 4 seconds and scorching was observed. Then, scaling was conducted after 2 hours. Scorching of the scale was also observed.

The results are shown in Table 1.

### Table 1

Relationship between the amounts of fresh egg yolk and MSNF vs. scorching

| Amount of fresh egg yolk | Amount of MSNF | | | |
|---|---|---|---|---|
| | 5.6% | 4.2% | 2.8% | 1.4% |
| 12% | -- | C | C | C |
| 10% | C | C | C | C |
| 8% | C | C | C | B-C |
| 6% | C | B-C | B | B |
| 2% | A | A | A | -- |

A: No scorching, B: Slight scorching, C: Scorching
--: Not tested

The conclusions to be drawn from the results of Table 1 are as follows:
(a) As the amount of egg yolk increases, scorching becomes more and more intense;
(b) Even when using the same amount of egg yolk, as the amount of MSNF increases, scorching becomes more and more intense;
(c) In so far as other means for preventing scorching is not conducted, fresh egg yolk cannot be added more than about 2%.

(2) Test 2

Studies on prevention of scorching by means of prevention of protein denaturation

In order to prevent thermal denaturation of proteins, based on the results of Test 1, effects of the increase in the amount of sugars, addition of salts having protein dissolving and emulsion stabilization activities and the use of heat resistant processed egg yolk were studied.

(a) Test 2-1

Selection of sugars and increase in the amount thereof

As the sugars to be added to fresh egg yolk, two formulations of (i) 4% of glucose, 8% of sorbitol and 5% of sucrose (total: 17%) and (ii) 30% of maltose and 1.5 % of sucrose (total: 31.5%) were studied. As a result, the time necessary to cause scorching was somewhat prolonged, but the scorched amount itself scarcely changed. Therefore, it was considered that the prevention of denaturation by selection of sugars to be added and increase in the amount thereof were not effective.

(b) Test 2-2

Selection of the salts and increase in the amount thereof

Salts known to be those having protein dissolving and emulsion stabilization activities were studied by adding (i) 0.3% of sodium hexametaphosphate and 0.02% of sodium bicarbonate (total: 0.32%) and increasing the amount up to (ii) 0.5% of sodium citrate and 0.02% of sodium bicarbonate (total: 0.52%). However, the salty taste became stronger, although scorching was not prevented.

(c) Test 2-3

Use of commercially available heat resistant processed egg yolk

Commercially available sweetened egg yolk (three commercially available products, two of them were enzymatically treated products and one of them was a heat-treated product) and fractionated egg yolk having 100% of lipid (phospholipid: 30%) were studied. However, the former three sweetened products were not effective in preventing the scorching. Although the latter fractionated egg yolk was effective in preventing scorching, since it had no egg flavor it was not suitable for the purpose of the present invention.

(3) Test 3

Studies on various denaturation methods

From the results of Tests 1 and 2, it was confirmed that pre-denaturation of egg yolk was indispensable to UHT. Accordingly, various denaturation methods were studied. The results thus obtained are summarized in Table 2.

Table 2

Comparison of various denaturation methods

| Denaturation conditions | Flavor | Denatured degree | Workability | Plant cost | Overall Evaluation | Scorching |
|---|---|---|---|---|---|---|
| Heating | B | A | B | A | A | None |
| Acid-salt treatment | C | B | B | A | B | None |
| Freezing | A | B | B | A | A | None |
| Solvent treatment | C | A | B | B | B | None |
| Pressurization | A | A | A | B | B | None |
| Enzymatic Occurred treatment | C | C | A | A | B | Scorched |

Evaluation criteria:

| | Flavor | Denatured degree | Workability | Plant cost | Overall evaluation |
|---|---|---|---|---|---|
| A | Excellent | High | Good | Large | Suitable |
| B | Good | Middle | Allowable | Small | Unsuitable |
| C | Bad | Low | - | - | - |

As shown in Table 2, various methods can be used for denaturation of egg yolk and they have individual characteristics. From the viewpoint of prevention of scorching, no scorching is observed in any of the products other than the enzymatically treated product. However, from the overall evaluation based on the desired high degree of denaturation, flavor and the plant cost, heating and freezing are excellent. In particular, the freezing-denatured product is most suitable in view of its flavor (the heat-denatured egg yolk product has strong heating odor containing weak sulfurous odor). Such a product maintains good flavor of fresh egg yolk and can be used for preparation of an o/w type emulsion. Although pressurization is suitable in view of flavor, denaturation degree and the like, there is a problem that pressurization requires a ultrahigh pressure press which is expensive and has inferior productivity.

Properties of frozen egg yolk and heat-treated egg yolk obtained by various denaturation methods are shown in Table 3.

## Table 3

### Comparison of freeze-denatured egg yolk and heat-denatured egg yolk

| Kind | State | Flow properties | Cause of denaturation | Relevant proteins |
|------|-------|-----------------|----------------------|-------------------|
| Fresh egg yolk | Liquid | Newtonian | -- | --- |
| Frozen egg yolk | Clay | Non-Newtonian (Plastic flow) | Dehydration | LDL[1] |
| Heated egg yolk | Gum | Non-Newtonian (Pseudo plastic) | Polymerization | LDL, HDL etc.[2] |

1: Low density lipoprotein ($LDL_1$+$LDL_2$)

2: High density lipoprotein (α-lipovitellin, β-lipovitellin etc.)

(4) Test 4

Studies on freezing conditions

Influence of the freezing and thawing conditions on the amount of soluble proteins as well as the correlation between a freezing temperature of egg yolk and a rheometer value were studied.

The term "rheometer value" used herein means a gel strength of a sample block to be tested (50 x 50 mm, 40 mm in thickness) measured at 5°C by RHEO METER® manufactured by Fudoh Kogyo Kabushiki Kaisha, Tokyo, Japan, with a plunger having a 10 mm diameter. RHEO METER® is a kind of penetrometer and the sample stage automatically moves upward at the rate of 5 cm/min. and the stress of penetration of a plunger (adapter) having 10 mm diameter is measured.

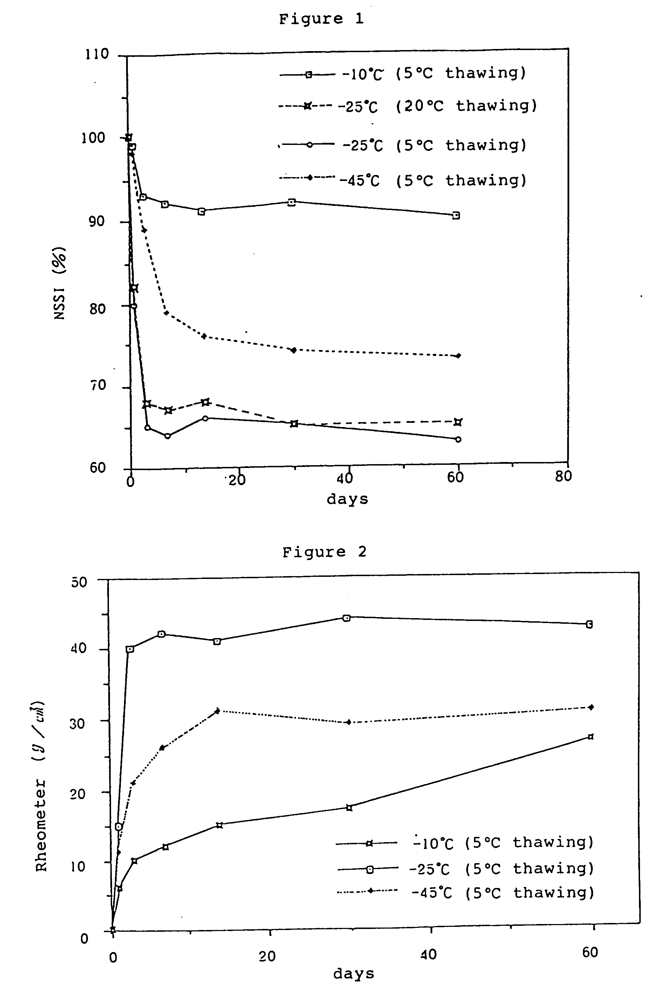

The results are shown Figures 1 and 2.

As is seen from Figure 1, NSSI value (the amount of proteins soluble in 0.3M aqueous sodium chloride solution (%)) tends to decrease (progress of denaturation) as the storage period in a frozen state (days) becomes longer. The most remarkable decrease is observed during storage at -25°C (denatured degree, i.e, decrease in NSSI: max. 37%)

(lines ———o——— and --⨯--).

The degree of denaturation becomes smaller by storage at -45°C

(line ----◆---- ).

Further, the degree of denaturation becomes much smaller by storage at -10°C

(the line ——☐—— ).

The similar tendency in decrease in the degree of denaturation is observed in both cases of slow thawing at 5°C

(line ——○—— )

and rapid thawing at 20°C

(line ——✕—— ).

However, in the case of slow thawing, the tendency of progress of denaturation is still observed even when 60 days have elapsed. It is considered that this tendency results from the difference in the rate of passage through the zone of maximum ice crystal formation. In any event, since the egg yolk is readily perishable, slow thawing is superior.

As shown in Figure 2, when the storage period in a frozen state becomes longer, the rheometer value ($g/cm^2$/10 m/m $\phi$ plunger) is increased. However, also in this case, the increase in the rheometer value is most rapid at -25°C

(line ——☐—— )

and the rheometer value reaches almost the maximum on the 5th day of storage. Then, the sample stored at -45°C

(line ----◆----. )

and, subsequently, the sample stored at -10°C

(line ——✕—— )

reach almost the maximum. The sample stored at -25°C shows the highest degree of increase. This is considered to be related to the degree of denaturation as described above with respect to Figure 1. That is, it is understood that, since the sample stored at -25°C shows the maximum degree of denaturation, the hardness of the frozen sample increases. Accordingly, deducing from these facts, whether the degree of freezing is suitable or not can be more simply determined by employing the rheometer value as an index of the degree of denaturation in comparison with NSSI measuring. The rheometer value is also useful as a standard for determining whether commercially available frozen egg yolk is suitable or not. According to the Applicants' experiments, the rheometer value is preferably 20 to 100 $g/cm^2$, more preferably not less than 40 $g/cm^2$.

The freezing-denatured egg yolk of the present invention can be produced by freezing fresh egg yolk at -20 to -30°C, storing it at -10 to -80°C for 5 to 60 days, preferably, at -20 to -40°C for 5 to 20 days, followed by allowing it to stand at 0 to 10°C for 1 to 3 days to thaw the frozen egg yolk.

## Ingredients of the emulsion composition

The above-described freeze-denatured egg yolk is emulsified in a water/fat or oil system containing an emulsifying agent, water, milk protein, fats and oils and, preferably, sugars.

The freeze-denatured egg yolk is preferably contained in the emulsion composition of the present invention in an amount of at least 1%, normally at least 4%, preferably not less than 6% based on the total weight of the composition. Although the egg yolk can be formulated in an amount of about 10% to about 20%, as the amount becomes larger, the balance between taste of egg yolk and milk taste tends to become inferior and it is preferred to use the freeze-denatured egg yolk in an amount of 10% or less based on the total weight of the composition.

As the fats and oils, preferably, those having the melting point of not lower than 20 °C can be used. For example, there can be used milk fat, coconut oil, palm kernel oil, palm oil, hardened soy bean oil, rapeseed oil, interesterified oils thereof, fractionated oils thereof and the like.

Milk protein is used to impart creaminess to the composition. Market milk, concentrated milk, skimmed milk, whole milk powder, skimmed milk powder, condensed milk and the like are used as the protein sources in addition to fresh cream. In particular, the milk protein sources containing milk fat are preferable in the present invention because coexisting milk fat imparts the desired flavor to the product cooperatively with the milk solid.

Sugars are not essential ingredients. However, the use of sugars is preferable to impart softness to a frozen product (for example, frozen mousse) containing the emulsion composition of the present invention because addition,of sugars can be omitted in the production of the product itself and further the freezing point of the product is depressed. As sugars which have low sweetness and high potency to depress the freezing point, there are monosaccharides and $C_6$ sugar alcohols having a lower molecular weight per mol such as xylose, glucose, sorbitol, reduced malt syrup and the like. When these sugars are used alone, they are crystallized upon freezing to cause undesired rough mouthfeel. However, when these sugars are used in combination, the crystallization point can be depressed. In particular, the use of glucose in combination with sorbitol is preferred in view of the cost and prevention of crystallization. Since the molecular weight of glycerin is low, it has highest potency to depress the freezing point but the content thereof is limited in view of flavor. A small amount of sucrose may be used in combination therewith to improve the quality of sweetness.

As surfactants, the edible surfactants such as lecithin, fatty acid monoglycerides, sucrose fatty acid esters, polyglycerol fatty acid esters, propyleneglycol fatty acid esters and sorbitan fatty acid esters may be used alone or in combination with each other. The use of hydrophobic and hydrophilic emulsifiers in combination is preferable in order to protect emulsification conditions from heat shock by UHT. In particular, since mechanical shearing action by the highly pressurized steam jet in VTIS or the like destroy the micellar structure of an emulsified material, strong emulsification by appropriate surfactants is required. Since egg yolk contains much lecithin, the use of hydrophobic surfactants can be decreased.

## Determination of the amount of oily ingredients

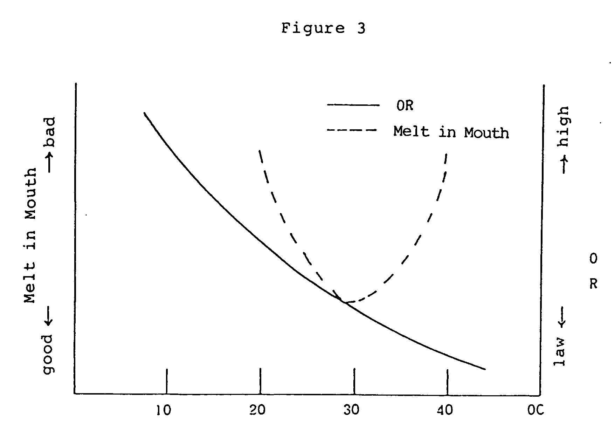

Since the amount of oily ingredients in the composition of the present invention has a correlation with melting in the mouth of the product and its overrun, the amount of such ingredients is of importance for obtaining a suitable o/w type emulsion. When the amount of the oily ingredients becomes smaller, overrun is increased and the air content in the product is increased. Accordingly, heat conductivity is lowered and thereby cold feel in the mouth fades and melting in the mouth deteriorates. On the contrary, when the amount of the oily ingredients becomes larger, overrun is decreased. However, melting in the mouth deteriorates and oily feeling appears strongly because of the increase in fats and oils (particularly solid fats). Accordingly, it is desirable that the amount of oily ingredients in the products is balanced from both viewpoints of overrun and melting in the mouth. As shown in Figure 3, in general, the best melting in the mouth is obtained at about 30% of the oily ingredients. In Figure 3, "OR" means over-run. This is a percentage calculated by dividing the volume of a given amount of the sample after whipping by that before whipping, subtracting one from the resulting value, and multiplying the resulting value by 100. This value represents the air content of sample. As this value becomes larger, air content becomes larger and melting in the mouth becomes worse. And "OC" means oil content. As this value becomes larger, the sample becomes more oily. On the other hand, when OC becomes smaller, OR becomes smaller and melting in the mouth also becomes worse. Hence, for practical design of a particular composition, the amount of the oily ingredients should be determined experimentally by preparing a frothed product and observing its penetration by a spoon (hardness), melting in the mouth, flavor, cold feel, oily feeling and the like.

Production of the o/w type emulsion composition

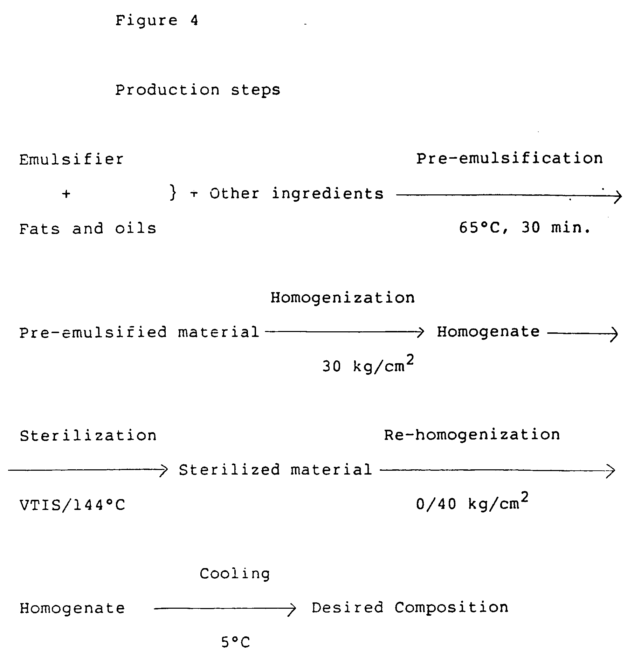

As shown in Figure 4, the o/w type emulsion of the present invention is produced by, like the production of a topping cream, mixing fats and oils and a surfactant, further mixing the resulting mixture with water and other hydrophilic ingredients at a temperature of not lower than the melting point of the fats and oils, pre-emulsifying the mixture with a high speed stirrer such as a Homomixer® (manufactured by Tokushu Kikagaku Kogyo Kabushiki Kaisha, Japan at a temperature of not lower than the melting point of the fats and oils, emulsifying the pre-emulsified material with a homogenizer, UHT-sterilizing the resulting emulsion, passing the emulsion again through a homogenizer, and cooling the homogenate.

Since egg yolk proteins contained in the freezing-denatured egg yolk of the present invention having the rheometer value (10 m/m $\phi$ plunger) of 20 to 100 g/cm$^2$ after freezing-denaturation are well denatured, scorching does not occur in a heat exchanger when the freeze-denatured egg yolk is subjected to UHT sterilization as an ingredient of the frothing o/w type emulsion and flavor of fresh egg yolk is kept. Accordingly, when this is used in the production of the frothing emulsion and then in the production of confectioneries containing air therein such as frozen mousse and the like, a tasty product which keeps the flavor of fresh egg yolk can be obtained. In addition, by adjusting the amount of the oily ingredients in the frothing o/w emulsion to about 30%, a product having an excellent balance between egg yolk flavor and milk taste as well as excellent balance of penetration of a spoon (hardness) at frozen conditions, air content, melting in the mouth, flavor and oily feeling and the like can be obtained. Further, by using a plurality of monosaccharides and/or sugar alcohols as sweeteners, deposition of sugars can be prevented and thereby the mouthfeel of the frozen confectionery product can be improved.

As described hereinabove, the uncooked aseptic emulsion composition containing the egg yolk of the present invention has the flavor of fresh egg yolk and good frothing properties.

The following Examples and Comparative Examples further illustrate the present invention in detail but are not to be construed to limit the scope thereof. All percent figures are by weight unless otherwise stated.

Example 1

A 10 kg case of frozen fresh egg yolk (manufactured by Kewpie Kabushiki Kaisha, Japan) was stored in a freezer at -25°C for 5 days and then thawed by allowing it to stand in a refrigerator at 5°C for 3 days. The resulting freezing-denatured egg yolk had clay like physical properties and the rheometer value (10 m/m $\phi$ plunger) of 40 g/cm$^2$.

Example 2

An o/w type emulsion composition containing egg yolk was produced according to the formulation as shown in Table 4 and the steps in Figure 4.

11

Table 4

Formulation

| Ingredients | Amount (%) |
| --- | --- |
| Hardened coconut oil | 9.0 |
| Hardened rapeseed oil mixture | 17.3 |
| Whole milk powder | 5.2 |
| Sweetened condensed milk | 3.0 |
| Freezing-denatured egg yolk | 8.0 |
| Sugar mixture[1] | 7.4 |
| Glycerin | 0.5 |
| Emulsion stabilizer[2] | 0.19 |
| Surfactant[3] | 0.4 |
| Water | remainder |

1: a mixture of glucose, sorbitol and sucrose.

2: a mixture of sodium hexametaphosphate, sodium bicarbonate and sodium citrate.

3: a mixture of lecithin and sucrose fatty acid ester.

The composition and properties of the above product are as shown in Tables 5 and 6.

### Table 5

Properties

| Ingredient | Composition (%) |
| --- | --- |
| Vegetable lipid | 26 |
| Animal lipid | 2 |
| Milk lipid | 1 |
| Skimmed milk solid | 4 |
| Sugars (other than lactose) | 15 |
| Total solid | 51 |

Table 6

Properties

| | |
|---|---|
| Time necessary for frothing (20 quart mixer) | 3' 50" |
| Overrun (20 quart mixer) | 150% |
| Time required for thickening | 5'or longer |
| Viscosity (No. 2 rotor) | 1,400 cps |
| Sediment (residue)* | none |
| Change in the viscosity (60 days) | shown in Figure 5 |

*:  The emulsion was diluted and passed through a 200 mesh filter cloth and residues on the filter cloth were observed by the naked eyes.

As shown in the above Table 6, the product of this Example was the excellent topping product containing egg yolk and having frothing properties. The viscosity thereof was almost stabilized after one week and it remained at 1,600 cps even after 60 days elapsed. No scorching occurred at sterilization.

Example 3

An o/w type emulsion composition was produced according to the same method as described in Example 2 except that the ingredients of Table 7 were used instead of those of Table 4.

Table 7

| Ingredients | Amount (%) |
|---|---|
| Hardened coconut oil | 9.0 |
| Hardened rapeseed oil mixture | 17.3 |
| Whole milk powder | 5.2 |
| Freezing-denatured egg yolk | 8.0 |
| Glucose | 4.0 |
| Sorbitol | 8.0 |
| Liquid sugar (sucrose) | 5.4 |
| Water | 40.1 |
| Emulsion stabilizer[1] | 0.2 |
| Surfactant[2] | 0.4 |
| Thickener[3] | 0.08 |

1: A mixture of sodium hexametaphosphate, sodium bicarbonate and sodium citrate.

2: Lecithin and sucrose fatty acid ester.
3: Xanthan gum.

Production

The products of the above Examples were produced as follows:

The fats and oils were melted by heating to 70°C and lecithin was added thereto to form an oil phase. On the other hand, water was warmed to 60°C and the emulsion stabilizer (salt which dissolves the proteins), whole milk powder, egg yolk and sugars were successively dissolved therein to form an aqueous phase. Then, the above oil and aqueous phases were mixed, the sucrose fatty acid ester, the thickener and a flavor were added thereto, the mixture was pre-emulsified by mixing at a high rate at 65 to 70°C with a Homomixer (supra), and the pre-emulsified material was homogenized under conditions of 0/30kg/cm² in two stages, the resulting homogenate was directly sterilized at 140 to 145°C for 3 to 4 seconds by UHT (VTIS), and the sterilized homogenate was again homogenized in two stages under conditions of 0/40kg/cm² and cooled to about 9°C. Although the emulsion contained egg yolk as much as about 8%, no scorching to the inner surface of the heat exchanger was observed upon UHT sterilization.

Properties

The viscosity of the o/w type emulsion composition obtained according to the above formulations and process was 1,300 cps, and the frothed material which was frothed with a Kenwood mixer showed about 150% of overrun. The frothed material had about 1,900 cps of the viscosity after 70 days of storage. And, the o/w type emulsion composition retained the flavor of fresh egg yolk and had no sulfurous odor and bitterness and, therefore, it was suitable as a raw material for frozen and frothed cake and the like.

Comparative Example

A comparative sample was produced by the same method as described in Example 3 except that fresh egg yolk was used in place of the freezing-denatured egg yolk. As a result, white denatured egg yolk protein began to adhere to the inner surface of the heat exchanger (holding tube of VTIS apparatus) 5 minutes after commencement of the sterilization and this changed into black scorched material after 10 minutes. Then the experiment was stopped.

**Claims**

1. An oil-in-water type emulsion composition comprising 1 to 20% by weight of freeze-denatured egg yolk having a rheometer value after freezing denaturation of 20 to 100 g/cm$^2$ obtained by using a plunger of 10 mm diameter.

2. An oil-in-water type emulsion composition as claimed in claim 1, wherein the amount of the freeze-denatured egg yolk is 4 to 10% by weight.

3. An oil-in-water type emulsion composition as claimed in claim 1 or claim 2, wherein the amount of oily ingredients is about 30% by weight based on the total weight of the composition.

4. An oil-in-water type emulsion composition as claimed in any one of claims 1 to 3, wherein the composition contains a plurality of sugars and/or sugar alcohols selected from the group consisting of xylose, glucose, sorbitol and hydrogenated malt syrup.

**Patentansprüche**

1. Eine Emulsionszusammensetzung vom Öl-in-Wasser-Typ, umfassend 1 bis 20 Gew.% gefrierdenaturiertes Eigelb, welches nach der Gefrierdenaturierung einen Rheometerwert, der unter Verwendung eines Kolbens von 10 mm Durchmesser erhalten wurde, von 20 bis 100 g/cm$^2$ aufweist.

2. Eine Emulsionszusammensetzung vom Öl-in-Wasser-Typ, wie sie im Anspruch 1 beansprucht wird, worin der Anteil des gefrierdenaturierten Eigelbs 4 bis 10 Gew.% beträagt.

3. Eine Emulsionszusammensetzung vom Öl-in-Wasser-Typ, wie sie im Anspruch 1 oder im Anspruch 2 beansprucht wird, worin der Anteil der öligen Inhaltsstoffe etwa 30 Gew.%, bezogen auf das Gesamtgewicht der Zusammensetzung, beträgt.

4. Eine Emulsionszusammensetzung vom Öl-in-Wasser-Typ, wie sie in irgendeinem der Ansprüche 1 bis 3 beansprucht wird, worin die Zusammensetzung mehrere Zucker und/oder Zuckeralkohole enthält, die aus der Gruppe ausgewählt sind, die aus Xylose, Glucose, Sorbit und hydriertem Malzsirup besteht.

**Revendications**

1. Composition d'émulsion de type huile-dans-eau comprenant de 1 à 20 % en masse de jaune d'oeuf dénaturé par congélation présentant une valeur de rhéomètre après dénaturation par congélation comprise entre 20 et 100 g/cm$^2$ obtenue en utilisant un piston de compression de 10 mm de diamètre.

2. Composition d'émulsion de type huile-dans-eau selon la revendication 1, dans laquelle la quantité du jaune d'oeuf dénaturé par congélation est comprise entre 4 et 10 % en masse.

3. Composition d'émulsion de type huile-dans-eau selon la revendication 1 ou la revendication 2, dans laquelle la quantité des composants huileux est d'environ 30 % en masse par rapport à la masse totale de la composition.

4. Composition d'émulsion de type huile-dans-eau selon l'une quelconque des revendications 1 à 3, dans laquelle la composition contient une pluralité de sucres et/ou d'alcools de sucres choisis dans le groupe constitué du xylose, du glucose, du sorbitol et du sirop de malt hydrogéné.

Figure 1

Figure 2

Figure 3

Figure 4

Production steps

Emulsifier                          Pre-emulsification

   +          } + Other ingredients ─────────────────────────⟶

Fats and oils                       65°C, 30 min.


                    Homogenization

Pre-emulsified material ───────────────⟶ Homogenate ───────⟶

                    30 kg/cm$^2$


Sterilization                       Re-homogenization

───────────────────⟶ Sterilized material ─────────────────────⟶

VTIS/144°C                          0/40 kg/cm$^2$


              Cooling

Homogenate   ───────────────⟶ Desired Composition

          5°C

Figure 5